# EUROPÄISCHE PATENTSCHRIFT

(11) **EP 3 418 577 B1**
(45) Veröffentlichungstag und Bekanntmachung des Hinweises auf die Patenterteilung: **27.10.2021**
(21) Anmeldenummer: 18179018.9
(22) Anmeldetag: 21.06.2018
(51) Int. Cl.: F04D 13/06, F04D 29/02, F04D 29/22, H02K 7/14, F04D 29/62, H02K 1/28, F01P 5/12, F01P 5/10

(54) **ROTORANORDNUNG**
ROTOR ASSEMBLY
ENSEMBLE ROTOR

(30) Priorität: 22.06.2017 DE 102017113828
(43) Veröffentlichungstag der Anmeldung: 26.12.2018
(73) Patentinhaber: MS-Schramberg Holding GmbH & Co. KG, 78713 Schramberg (DE)
(72) Erfinder: Laufer, Dirk, 78713 Schramberg (DE); Haas, Stefan, 78144 Schramberg (DE)
(74) Vertreter: Fleck, Hermann-Josef

(56) Entgegenhaltungen:
- EP-A1- 3 006 742
- JP-A- 2012 202 312

## Beschreibung

Die Erfindung betrifft eine Rotoranordnung zum rotierbaren Einbau in ein Pumpengehäuse einer elektrischen Pumpe für flüssige Medien, insbesondere Kühlmittelpumpe, mit einem Antriebsteil und einem mit dem Antriebsteil drehfest verbundenen Pumpenteil, wobei der Pumpenteil einen axial an einem oberen Ende der Rotoranordnung angeordneten Strömungsbereich mit einer Zuströmöffnung und mehreren Flügeln zur Leitung von Kühlmittel aufweist, wobei der Antriebsteil zum Antrieb nach elektromotorischem Prinzip eine magnetische Substanz aufweist und mindestens zweipolig magnetisiert ist.

Eine Rotoranordnung dieser Art ist in der JP 2012 202312 A angegeben. Bei dieser bekannten Rotoranordnung einer elektrischen Pumpe für flüssige Medien, insbesondere Kühlmittelpumpe, ist ein Pumpenteil mit einem Antriebsteil zum Fördern des flüssigen Mediums drehfest verbunden. Der Pumpenteil weist einen axial an einem oberen Ende der Rotoranordnung angeordneten Strömungsbereich mit einer Zuströmöffnung und mehreren Flügeln zur Leitung des flüssigen Mediums auf. Der Antriebsteil ist mehrschichtig aufgebaut mit einem ringförmigen zylindrischen Kunststoffmagnet außen, einer zylindrischen Traghülse innen und einem dazwischen liegenden Kunststoffteil 67, der auf seiner dem Einströmbereich zugeordneten Oberseite erweitert ist und Flügel des Pumpenteils aufnimmt.

In der EP 3 006 742 A1 ist eine elektrische Kühlmittelpumpe gezeigt, die ebenfalls einen Antriebsteil und einen Pumpenteil aufweist, wobei der Pumpenteil eine zentrale Durchgangsöffnung des Antriebsteils mit einem zylindrischen Ansatz durchragt. Der Antriebsteil ist einströmseitig erweitert, um Schaufelelemente des Pumpenteils aufzunehmen.

Eine weitere derartige Rotoranordnung, wie sie z. B. in Kühlmittelpumpen für Kraftfahrzeuge beispielsweise für die Ladeluft- und Motorkühlung eingesetzt wird, ist aus der EP 2 561 232 B1 bekannt. Die Rotoranordnung besteht aus einem Pumpenrotor und einem Motorrotor. Der Motorrotor ist im Wesentlichen ringförmig ausgebildet und der Pumpenrotor weist mehrere Rotorflügel auf, die unmittelbar auf einem Topfboden des Motorrotors aufstehen. Der Pumpenrotor und der Motorrotor sind separat voneinander durch Spritzguss hergestellte einstückige Kunststoff-Bauteile, die aus verschiedenen Materialien bestehen.

Eine ähnliche Rotoranordnung, die in einer elektrisch angetriebenen Pumpe eingebaut ist, zeigt die EP 3 115 612 A1. Die Rotoreinheit weist dabei einen als Pumpenteil ausgestalteten ersten Teil und einen als Antriebsteil ausgestalteten zweiten Teil auf, wobei beide Teile durch ein Spritzgießverfahren hergestellt und der erste Teil über die Rotorflügel mit dem zweiten Teil durch Schweißen verbunden ist. Der durch Spritzgießen geformte zweite Teil besteht aus einem Mischmaterial aus PPS-Kunststoff und Carbonfasern, wobei ein Permanentmagnet als durch Spritzgießen geformter Einsatz ausgebildet ist.

Auch in der US 2007/0052310 A1 ist eine Fluidpumpe mit einem Rotor gezeigt, der einen Pumpteil mit einem Inpeller und einen Antriebsteil mit einem Permanentmagneten mit z. B. acht Magnetpolen aufweist. In dem Permanentmagneten ist eine Achse eingeformt. Der Permanentmagnet ist aus einer Mischung von Magnetpulver und einem thermoplastischen Kunststoffmaterial wie PPS gefertigt.

Der Erfindung liegt demgegenüber die Aufgabe zugrunde, eine Rotoranordnung bereitzustellen, die Vorteile in der Fertigung bietet.

Diese Aufgabe wird mit den Merkmalen des Anspruchs 1 gelöst. Dabei ist vorgesehen, dass der Antriebsteil aus separat voneinander gespritzten, miteinander - zu einer Baueinheit - verbundenen Teilen mehrteilig ausgebildet ist.

Durch das separate Spritzen der Teile, beispielsweise in nacheinander geschalteten Schritten eines Spritzprozesses oder in unterschiedlichen Spritzprozessen, wird eine mehrstufige Fertigung des Bauteils erreicht. Die in den einzelnen Stufen gefertigten Einzelteile mit ihrem geringeren Teilevolumen als der gesamte Antriebsteil weisen vorteilhaft eine wesentlich geringere Abkühlungszeit auf, sodass die Kühlzeiten bei der Fertigung reduziert werden. Auf diese Weise kann das Bauteil als Baueinheit in einer für die Gesamt-Materialmenge vergleichsweise schnellen Taktzeit hergestellt werden. Gleichzeitig erlaubt diese Ausgestaltung eine fehlerreduzierende Fertigung, wodurch Unwuchten reduziert werden. Dies ergibt im Betrieb in einer Kühlmittelpumpe einen geräuschreduzierten Lauf der Rotoranordnung.

Vorteilhafterweise bestehen die separat voneinander gespritzten Teile aus unterschiedlichen Materialzusammensetzungen. Dadurch können beispielsweise kostenintensivere Materialien gezielt in den Bereichen eingesetzt werden, in denen sie benötigt werden. Andere Teile, in denen bestimmte Materialeigenschaften nicht benötigt werden, können durch entsprechend andere, z.B. günstigere, Materialien hergestellt werden. Dies ermöglicht eine Kostenoptimierung der Baueinheit "Antriebsteil" und damit der Rotoranordnung.

Bei den separat voneinander gespritzten Teilen handelt es sich um ein Außenteil und ein Innenteil, wobei der Außenteil den Innenteil in einem axialen Antriebsbereich zumindest bereichsweise zylindrisch umschließt. Der Außenteil ist zumindest bereichsweise derart zylindrisch ausgebildet, dass der Innenteil, mit seinem ebenfalls zumindest bereichsweise zylindrischen Außenumfang formschlüssig in dem Außenteil aufgenommen ist, wodurch die beiden Teile sicher und positionsfest miteinander verbunden sind. Durch eine derartige Aufteilung können die Teile vorteilhaft funktional getrennt werden und jeweils auf ihre Funktion optimierte Materialien für die jeweiligen Teile verwendet werden.

Erfindungsgemäß weist der Außenteil die magnetische Substanz auf und ist magnetisierbar. Zudem ist es vorteilhaft, dass der Innenteil aus einem nicht magnetisierbaren Material, vorzugsweise Kunststoff, besteht. So kann der Außenteil seine Funktion zur Aufnahme einer magnetischen Antriebskraft vorteilhaft erfüllen. Fertigungstechnische Vorteile ergeben sich, wenn es sich dabei um ein kunststoffgebundenes Magnetmaterial, beispielsweise Hartferrit-Magnetmaterial, handelt, das durch Spritzguss geformt wird. Dem Innenteil kommt eine Stabilisierungs- und Tragefunktion zu, wofür sich ein Kunststoff, beispielsweise kohlefaserverstärktes Polyphenylsulfid (PPS), als vorteilhaft erwiesen hat.

Der Innenteil ist im Wesentlichen zylindrisch ausgebildet und an seinem oberen, in Richtung Strömungsbereich weisenden Ende, axial oberhalb des Antriebsbereiches, zur Bildung eines Aufnahmebereiches zumindest auf den radialen Außendurchmesser, auf den sich die Flügel erstrecken, radial aufgeweitet. Die Aufweitung kann beispielsweise durch einen Querschnittssprung in dem äußeren Umfang des Innenteils realisiert sein. Der Aufnahmebereich ist vorzugsweise nicht mehr von dem Außenteil umschlossen. Allerdings können an der Unterseite des Aufnahmebereichs Fügeelemente angeordnet sein, die in verbundenem Zustand in den Außenteil hineinragen und die Stabilität der Verbindung verbessern. Vorzugsweise weist der Aufnahmebereich einen größeren Außendurchmesser auf als das Außenteil, beispielsweise den größten Außendurchmesser der Rotoranordnung.

In einer bevorzugten Ausgestaltungsvariante sind auf der, in Richtung Strömungsbereich weisenden, Oberseite des Aufnahmebereiches Vertiefungen zur Aufnahme der in Richtung Oberseite weisenden axialen Flügelenden ausgebildet und bildet der übrige Bereich der Oberseite eine äußere Leitfläche zur Leitung von Kühlmittel. Die Vertiefungen bilden Aufnahmen, die in ihrem radial-tangentialen Verlauf dem der Flügel entsprechen. In komplett montiertem Zustand ist der Pumpenteil mit den entsprechenden Flügelenden in die Vertiefungen eingesetzt, wodurch eine stabile Lagerung aneinander unterstützt wird.

Der Pumpenteil weist radial zentriert eine sich axial erstreckende Hülse auf, die in eine radial zentrierte, sich axial erstreckende Öffnung des Innenteils formschlüssig eingesetzt ist und sich vorzugsweise durch den Antriebsbereich hindurch erstreckt. Dies ist vorteilhaft für einen präzisen Aufbau mit stabiler Lagerung des Pumpenteils an dem Antriebsteil, wobei der Zusammenbau durch die Zentrierung begünstigt wird. Die Hülse ist dabei dazu ausgebildet, eine Drehachse der Kühlmittelpumpe, auf der die Rotoranordnung rotiert, formschlüssig aufzunehmen.

Einer sicheren Positionierung und Lagerung ist es zuträglich, wenn die Hülse an ihrem oberen, in Richtung Strömungsbereich weisenden Ende einen, vorzugsweise umlaufenden, Kragen aufweist, der komplementär zu einer, vorzugsweise umlaufenden, Aussparung in dem Innenteil ausgebildet und in der Aussparung formschlüssig aufgenommen ist. Als Kragen wird dabei ein Abschnitt der Hülse bezeichnet, dessen Außendurchmesser größer ist als der übrige, sich in der Öffnung befindliche Außendurchmesser der Hülse. Auf diese Weise kann die Hülse beim Einsetzen in die Öffnung sich axial und radial an dem Innenteil abstützen.

Die Hülse kann vorteilhaft in das Strömungskonzept in Zusammenwirken mit der äußeren Leitfläche des Innenteils einbezogen werden, wenn die Hülse an ihrem oberen Ende abgeschlossen ist und der Abschluss nach oben hin eine innere Leitfläche zur Leitung von Kühlmittel bildet, die insbesondere im Wesentlichen stetig in die äußere Leitfläche übergeht. Durch den stetigen Übergang werden Strömungswiderstände verringert, was der Effizienz der Kühlmittelpumpe zuträglich ist.

In einer bevorzugten Ausgestaltungsvariante weist der Pumpenteil einen flächigen Deckteil auf, der den Strömungsbereich zumindest bereichsweise nach oben begrenzt und von dem aus sich die Flügel axial in Richtung des Antriebsteils erstrecken. Wenn der Außendurchmesser im Wesentlichen dem des Aufnahmebereichs entspricht, kann eine sichere und definierte Strömungsführung bis zum Ausströmbereich erreicht werden. Dabei wird die Kühlmittelströmung durch eine Art von Strömungskanälen geleitet, die unten von der äußeren Leitfläche, oben von der Unterseite des Deckteils und seitlich von den sich axial erstreckenden Flügelwänden begrenzt werden. Der Ausströmbereich ist dann an dem Außendurchmesser der äußeren Leitfläche angeordnet, an dem die Kühlmittelströmung die Strömungskanäle bzw. die Rotoranordnung verlässt.

Vorzugsweise ist die Zuströmöffnung radial zentriert in dem Deckteil ausgebildet und weist eine axial ausgerichtete Umrandung auf, deren Innenwandung gegenüber der axialen Richtung von oben nach unten und nach innen geneigt, z. B. um einen Winkel von 5° bis 15°, vorzugsweise 10°, verläuft. Auf diese Weise kann das Kühlmittel von oben in einen Strömungsbereich der Rotoranordnung hineinströmen. Die axial ausgerichtete Umrandung mit der von oben nach unten geneigten Innenwandung erlaubt dabei eine optimierte Zuströmung des Kühlmittels.

Nachfolgend wird die Erfindung anhand von Ausführungsbeispielen unter Bezugnahme auf die Zeichnungen näher erläutert. Es zeigen:
- Fig. 1: eine erfindungsgemäße Rotoranordnung in seitlicher Ansicht,
- Fig. 2: die Rotoranordnung gemäß Fig. 1 in perspektivischer Ansicht von unten,
- Fig. 3: einen Pumpenteil der Rotoranordnung gemäß Fig. 1 in perspektivischer Ansicht von unten,
- Fig. 4: den Pumpenteil gemäß Fig. 3 in einem Längsschnitt entlang der Mittellängsachse,
- Fig. 5: ein Detail des unteren Endes des Pumpenteils gemäß Fig. 4,
- Fig. 6: einen Antriebsteil der Rotoranordnung gemäß Fig. 1 in perspektivischer Ansicht von oben,
- Fig. 7: den Antriebsteil gemäß Fig. 6 in einem Längsschnitt entlang der Mittellängsachse und
- Fig. 8: die Rotoranordnung gemäß Fig. 1 in einem Längsschnitt entlang der Mittellängsachse.

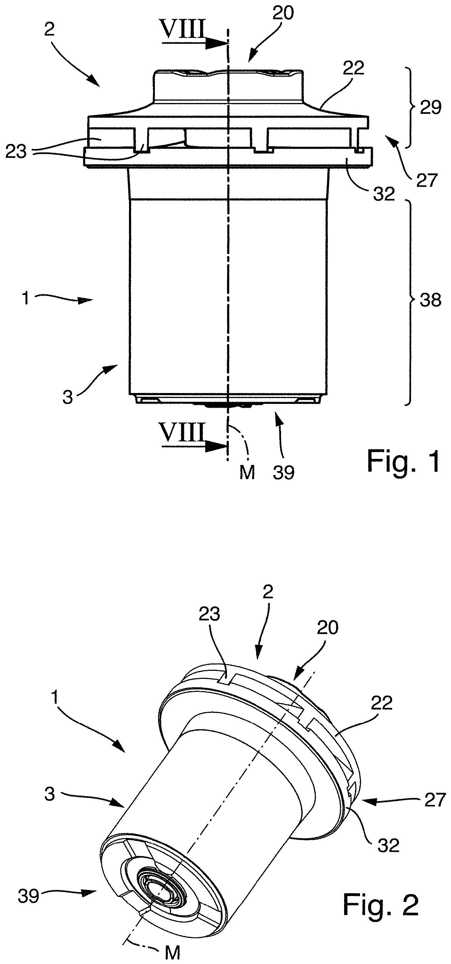

Die Figuren 1 und 2 zeigen eine Rotoranordnung 1, wie sie beispielsweise in einem Pumpengehäuse einer elektrischen Kühlmittelpumpe eines Kraftfahrzeuges verwendet ist. Die Rotoranordnung 1 weist einen Pumpenteil 2 auf, der bezüglich der axialen Richtung (entlang einer Mittellängsachse M) an dem oberen Ende der Rotoranordnung 1 einen Strömungsbereich 29 aufweist. Der Strömungsbereich 29 umfasst eine nach oben gerichtete Zuströmöffnung 20, die in einen flächigen Deckteil 22 übergeht. An dem Deckteil 22 sind Flügel 23 des Strömungsbereichs 29 angeordnet, die nach außen zu einem Ausströmbereich 27 hin verlaufen. Der Deckteil 22 begrenzt so den Strömungsbereich 29 in dem Bereich der Flügel 23 nach oben hin, während die Flügel 23 nach außen verlaufende Strömungskanäle bilden. Weitere Details ergeben sich aus den nachfolgenden Figuren.

Unterhalb des Strömungsbereiches 29 schließt sich ein Antriebsteil 3 an, der sich im Wesentlichen zylindrisch entlang der Mittellängsachse M erstreckt und nach unten durch einen Boden 39 abgeschlossen ist. Der Boden 39 bildet bei dem gezeigten Aufbau zugleich einen unteren Abschluss der Rotoranordnung 1. Der Antriebsteil 3 ist zum Antrieb der Rotoranordnung 1 nach elektromotorischem Prinzip ausgebildet, wobei er eine magnetische Substanz aufweist und mindestens zweipolig magnetisiert ist. In Wirkverbindung mit einem Stator in dem Pumpengehäuse (hier nicht gezeigt) wird die Rotoranordnung 1 mit dem Antriebsteil 3 und dem drehfest mit dem Antriebsteil 3 verbundenen Pumpenteil 2 in Rotation versetzt. Durch entsprechende Ausbildung des Strömungsbereichs 29 des Pumpenteils 2 wird auf das durch den Strömungsbereich fließende Fluid bzw. Kühlmittel eine Pumpwirkung erzielt, die das Kühlmittel in Bewegung versetzt.

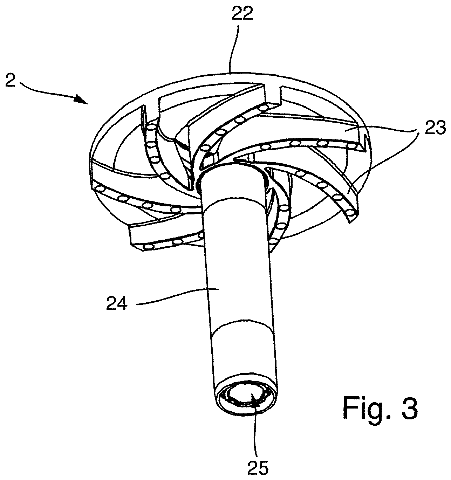

Ein besonderer Vorteil der vorliegenden Erfindung liegt in dem mehrteiligen Aufbau der Rotoranordnung 1. Neben dem Pumpenteil 2 und dem Antriebsteil 3, die separat voneinander gespritzt, und dann verbunden werden, ist der Antriebsteil 3 ebenfalls aus zwei separaten, miteinander verbundenen Teilen ausgebildet. Der mehrteilige Aufbau der Rotoranordnung 1 wird aus den Figuren 3 bis 8 ersichtlich.

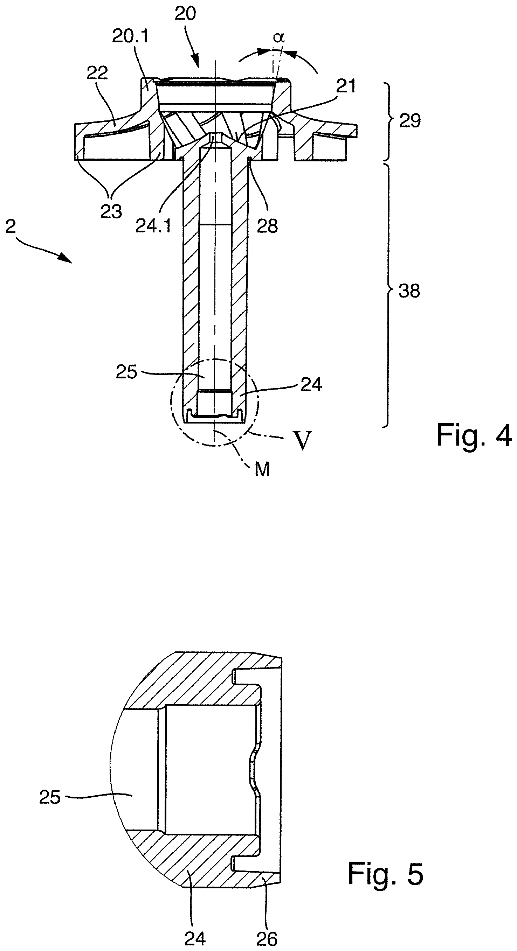

Dabei zeigen Fig. 3 in einer perspektivischen Ansicht und Fig. 4 und 5 in einer Schnittdarstellung die nähere Ausbildung des Pumpenteils 2. An seinem oberen Ende weist der Pumpenteil 2 radial zentriert die nach oben gerichtete, vorliegend runde Zuströmöffnung 20 auf, die von einer ringartigen, axial ausgerichteten Umrandung 20.1 umgeben ist. Die Innenwandung der Umrandung 20.1 ist gegenüber der axialen Richtung von oben nach unten um einen Winkel α von etwa 5° bis 15° nach innen geneigt. An ihrem unteren Ende geht die Umrandung 20.1 in den im Wesentlichen radial nach außen und dabei leicht nach unten verlaufenden Deckteil 22 über. Ausgehend von dem Deckteil 22 erstrecken sich die Flügel 23 axial nach unten. Die Flügel 23 verlaufen etwa beginnend unterhalb der Strömungsöffnung 20 radialtangential gebogen nach außen bis auf den Außendurchmesser des Deckteils 22.

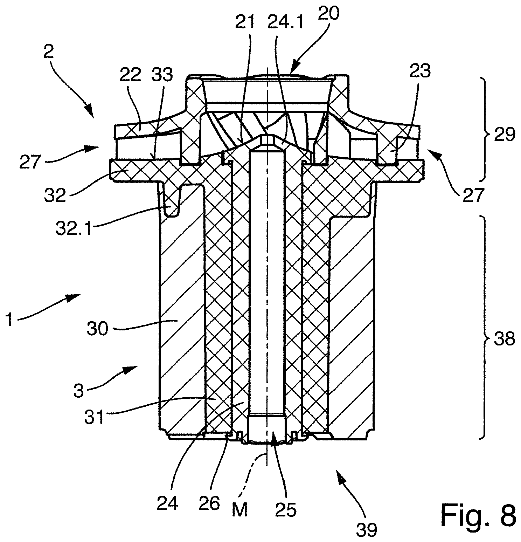

Weiterhin weist der Pumpenteil 2 radial zentriert eine sich axial erstreckende Hülse 24 auf, die eine Aufnahme 25 umschließt. Die Aufnahme 25 ist zur formschlüssigen Aufnahme einer Drehachse der Kühlmittelpumpe ausgebildet. In montiertem Zustand ist die Hülse 24 in eine sich axial erstreckender Öffnung 36 des Innenteils 31 formschlüssig eingesetzt (vgl. Fig. 8). Dabei erstreckt sich die Hülse 24 in vorliegender Ausführung durch den Antriebsbereich hindurch, was eine gute Stabilität des montierten Teils ergibt. Die Aufnahme 25 ist an ihrem oberen, in Richtung Strömungsbereich 29 weisenden Ende durch einen Abschluss 24.1 weitgehend verschlossen. Der Abschluss 24.1 erstreckt sich radial über den Durchmesser der Hülse hinaus, sodass ein Kragen 28 gebildet ist, der einen größeren Durchmesser aufweist als der übrige Teil der Hülse 24. Auf der Oberseite ist der Abschluss 24.1 zu einer inneren Leitfläche 21 ausgebildet, die in montiertem Zustand im Wesentlichen stetig, d.h. ohne Diskontinuitäten, in eine äußere Leitfläche 33 des Innenteils 31, insbesondere des Aufnahmebereichs 32, übergeht. Die Formgebung ist dabei leicht konisch, sodass sowohl durch die konische Formgebung als auch durch den stetigen Übergang auf die äußere Leitfläche 33 eine strömungsgünstige Form der gesamten Leitfläche (gebildet durch die innere Leitfläche 21 und die äußere Leitfläche 33) erreicht wird.

Wie Fig. 5 genauer zeigt, ist an dem unteren, von dem Strömungsbereich 29 abgewandten Ende der Hülse 24 ein ringartiger Überstand 26 an die Hülse 24 angeformt, der eine geringere Wandungsdicke aufweist als der übrige, zylindrische Teil der Hülse 24. Bei Montage des Pumpenteils 2 mit dem Antriebsteil 3 wird der Überstand 26 nach außen geklappt und so der Pumpenteil 2 sicher in dem Antriebsteil 3 gehalten.

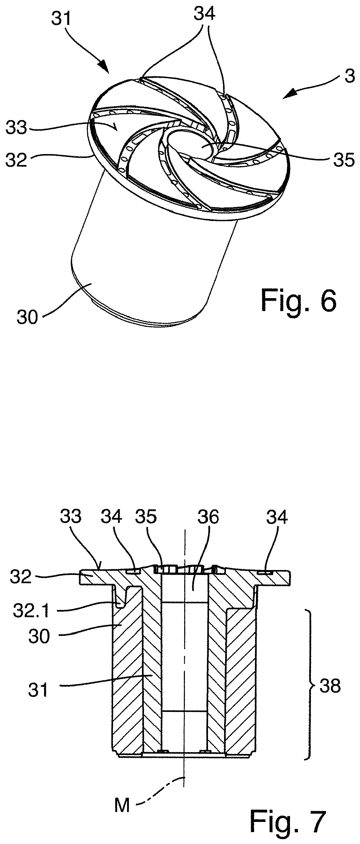

Der mehrteilige Antriebsteil 3 in seiner zweiteiligen Ausführung mit erfindungsgemäß einem Außenteil 30 und dem Innenteil 31 ist in Fig. 6 (perspektivische Darstellung) und Fig. 7 (Schnittdarstellung) im Einzelnen dargestellt. Der Außenteil 30 ist im Wesentlichen zylindrisch ausgebildet und umschließt formschlüssig den Innenteil 31, der ebenfalls, zumindest in einem Antriebsbereich 38, im Wesentlichen zylindrisch ausgebildet ist. Für eine stabilere Verbindung der beiden Teile können, wie hier gezeigt, an dem Innenteil Fügeelemente 32.1 angeordnet sein. Der Außenteil 30 weist eine magnetische Substanz auf, die vorzugsweise in einem Kunststoff gebunden ist, sodass eine Fertigung durch Spritzguss möglich ist. Der Innenteil besteht aus einem nicht magnetisierbaren Material, vorzugsweise Kunststoff, beispielsweise kohlefaserverstärktes Polyphenylsulfid (PPS). Dadurch kann der Innenteil 31 stabil eine Tragefunktion für das Pumpenteil 2 erfüllen, wofür in den betreffenden Bereichen des Antriebteils 3 keine Magnetisierung nötig ist. So kann teureres Magnetmaterial eingespart werden.

Der Antriebsteil 3 wird beispielsweise zweistufig in einem Spritzgussverfahren hergestellt. Dabei wird in einem ersten Verfahrensschritt der Innenteil 31 gespritzt, an dem in einem zweiten Verfahrensschritt der Außenteil 30 angespritzt wird, sodass der vorteilhafte zweiteilige Aufbau des Antriebsteils 3 erreicht wird.

Der im Wesentlichen zylindrisch ausgebildete Innenteil 31 ist an seinem oberen, in Richtung Strömungsbereich 29 weisenden Ende zur Bildung des Aufnahmebereiches 32 radial aufgeweitet. Der Aufnahmebereich 32 ist nicht von dem Außenteil 30 umgeben. Vorliegend ist die Aufweitung durch einen Querschnittssprung von dem Querschnitt des Innenteils 31 im Antriebsbereich 38 auf einen demgegenüber vergrößerten Außendurchmesser realisiert. Der radiale Außendurchmesser des Aufnahmebereiches 32 entspricht mindestens dem Außendurchmesser, auf dem die Flügel 23 des Pumpenteils 2 enden, um eine sichere Lagerung der Flügel 23 an dem Aufnahmebereich 32 und eine definierte Strömungsführung zu erreichen. Zum Zwecke der sicheren Lagerung sind an der Oberseite des Aufnahmebereichs 32 Vertiefungen 34 zur Aufnahme der in Richtung der Oberseite weisenden (axialen) Flügelenden ausgebildet. Der radial-tangentiale Verlauf der Vertiefungen 34 entspricht dem der Flügel 23. In montiertem Zustand sind die Flügelenden in die Vertiefungen 34 eingesetzt. Innerhalb der Vertiefungen 34 können Öffnungen zur Aufnahme von komplementären, beispielsweise stiftartigen, Positionierungselementen an den Flügelenden vorhanden sein, wodurch die drehfeste Positionierung des Pumpenteils an dem Antriebsteil verbessert wird. Der übrige Bereich der Oberseite bildet eine äußere Leitfläche 33 zur Leitung von Kühlmittel, die in montiertem Zustand zusammen mit der inneren Leitfläche 21 zur Leitung von Kühlmittel radial nach außen dient.

Radial zentriert in dem Innenteil 31 ist die Öffnung 36 zur formschlüssigen Aufnahme der Hülse 24 vorhanden. Die Öffnung 36 erstreckt sich vorzugsweise ausgehend von dem unteren Ende der Rotoranordnung 1 nach oben und geht an ihrem oberen Ende in den Aufnahmebereich 32 über. An dem oberen Ende der Öffnung 36, im Übergang von der Öffnung 36 in die Oberseite des Aufnahmebereichs 32, ist eine ringförmige, vorliegend als treppenartiger Absatz gestaltete Aussparung 35 vorhanden. Diese dient zur Aufnahme des Kragens 28 der Hülse 24, wodurch insbesondere auch eine sichere radiale Positionierung des Pumpenteils 2 an dem Antriebsteil 3 erreicht wird.

Fig. 8 zeigt die montierte Rotoranordnung 1 mit ihrer insgesamt dreiteiligen Ausbildung in einer Schnittdarstellung. Zur Fertigung der Rotoranordnung 1 wird der Pumpenteil 2 separat insbesondere aus Kunststoff gefertigt, vorzugsweise gespritzt. Der Antriebsteil 3 wird z.B. in einem Spritzprozess zweistufig hergestellt. Dabei wird zunächst der Innenteil 31, vorzugsweise aus Kunststoff, separat gespritzt und anschließend der Außenteil 30 an den Innenteil 31 angespritzt. Durch den zweistufigen Spritzprozess sind vorteilhaft kürzere Kühlzeiten und damit kurze Taktzeiten bei der Fertigung erreichbar. Ferner können für die unterschiedlichen Teile entsprechend ihrer Funktion vorteilhafte Materialien gewählt werden. Dabei kann entsprechend kostenintensives Material, wie Magnetverbundmaterial, gezielt lediglich an den Stellen eingesetzt werden, an denen es funktionell benötigt wird. Nach Fertigung der Einzelteile wird der Pumpenteil 2 mit dem Antriebsteil 3 verbunden. Die Verbindung dieser beiden Teile wird beispielsweise durch Ultraschall- und/oder Warmumformung sichergestellt.

Im Betrieb der Kühlmittelpumpe wird die Rotoranordnung 1 mittels des Antriebsteils 3, auf dessen Außenteil 30 eine Magnetkraft wirkt, angetrieben. Dadurch strömt das Kühlmittel durch die Zuströmöffnung 20 in den Strömungsbereich 29 im Wesentlichen axial ein. Durch die von der inneren und äußeren Leitfläche 21, 33 gebildete Leitfläche wird die Strömung im Wesentlichen radial nach außen umgelenkt, wobei sie durch eine Art von Strömungskanälen, oben begrenzt durch den Deckteil 22, unten begrenzt durch die äußere Leitfläche 33 und seitlich begrenzt durch die Flügel 23 an den Ausströmbereich 27 geführt wird, wo sie die Rotoranordnung 1 verlässt. Dadurch wird eine Pumpwirkung auf das Kühlmittel erzeugt.

Der erfindungsgemäße Aufbau der Rotoranordnung 1 mit dem mehrteiligen, insbesondere zweiteilig, ausgebildeten Antriebsteil 3, ergibt neben einem kompakten, robusten Aufbau wesentliche Vorteile bei der Fertigung. Hierbei können die Taktzeiten verkürzt und die Genauigkeit erhöht werden. Eine erhöhte Genauigkeit mit geringeren Fertigungstoleranzen bzw. Unwuchten wirkt sich dabei vorteilhaft auf die Laufruhe der Kühlmittelpumpe aus.

## Patentansprüche

1. Rotoranordnung (1) zum rotierbaren Einbau in ein Pumpengehäuse einer elektrischen Pumpe für flüssige Medien, insbesondere Kühlmittelpumpe, mit einem Antriebsteil (3) und einem mit dem Antriebsteil (3) drehfest verbundenen Pumpenteil (2),
wobei der Pumpenteil (2) einen axial an einem oberen Ende der Rotoranordnung (1) angeordneten Strömungsbereich (29) mit einer Zuströmöffnung (20) und mehreren Flügeln (23) zur Leitung von Kühlmittel aufweist,
wobei der Antriebsteil (3) aus in einem Spritzgussverfahren separat gespritzten, miteinander verbundenen Teilen mehrteilig umfassend einen Außenteil (30) und einen Innenteil (31) ausgebildet ist und der Außenteil (30) zum Antrieb nach elektromotorischem Prinzip eine magnetisierbare magnetische Substanz aufweist und unter Ausbildung von mindestens zwei Magnetpolen magnetisiert ist, und wobei der Außenteil (30) den im wesentlichen zylindrischen Innenteil (31) in einem axialen Antriebsbereich (38) zumindest bereichsweise zylindrisch umschließt,
wobei der Innenteil (31) im Wesentlichen zylindrisch ausgebildet ist und an seinem oberen, in Richtung Strömungsbereich (29) weisenden Ende, axial oberhalb des Antriebsbereiches (38), zur Bildung eines Aufnahmebereiches (32) zumindest auf den radialen Außendurchmesser, auf den sich die Flügel (23) erstrecken, radial aufgeweitet ist,
**dadurch gekennzeichnet, dass** der Pumpenteil (2) radial zentriert eine sich axial erstreckende Hülse (24) aufweist, die in eine radial zentrierte, sich axial erstreckende Öffnung (36) des Innenteils (31) formschlüssig eingesetzt ist und sich durch den Antriebsbereich (38) hindurch erstreckt.

2. Rotoranordnung (1) nach Anspruch 1,
**dadurch gekennzeichnet,**
**dass** die separat voneinander gespritzten Teile aus unterschiedlichen Materialzusammensetzungen bestehen.

3. Rotoranordnung (1) nach Anspruch 1 oder 2,
**dadurch gekennzeichnet,**
**dass** der Innenteil (31) aus einem nicht magnetisierbaren Material, vorzugsweise Kunststoff, besteht.

4. Rotoranordnung (1) nach einem der vorhergehenden Ansprüche,
**dadurch gekennzeichnet,**
**dass** auf der, in Richtung Strömungsbereich (29) weisenden, Oberseite des Aufnahmebereiches (32) Vertiefungen (34) zur Aufnahme der in Richtung Oberseite weisenden axialen Flügelenden ausgebildet sind und dass der übrige Bereich der Oberseite eine äußere Leitfläche (33) zur Leitung von Kühlmittel bildet.

5. Rotoranordnung (1) nach einem der vorhergehenden Ansprüche ,
**dadurch gekennzeichnet,**
**dass** die Hülse (24) an ihrem oberen, in Richtung Strömungsbereich (29) weisenden Ende einen, vorzugsweise umlaufenden, Kragen (28) aufweist, der komplementär zu einer, vorzugsweise umlaufenden, Aussparung (35) in dem Innenteil (31) ausgebildet und in der Aussparung (35) formschlüssig aufgenommen ist.

6. Rotoranordnung (1) nach Anspruch 4 oder 5,
**dadurch gekennzeichnet,**
**dass** die Hülse (24) an ihrem oberen Ende abgeschlossen ist und der Abschluss (24.1) nach oben hin eine innere Leitfläche (21) zur Leitung von Kühlmittel bildet, die insbesondere im Wesentlichen stetig in die äußere Leitfläche (33) übergeht.

7. Rotoranordnung (1) nach einem der vorhergehenden Ansprüche,
**dadurch gekennzeichnet,**
**dass** der Pumpenteil (2) einen flächigen Deckteil (22) aufweist, der den Strömungsbereich (28) zumindest bereichsweise nach oben begrenzt und von dem aus sich die Flügel (23) axial in Richtung des Antriebsteils (3) erstrecken.

8. Rotoranordnung (1) nach Anspruch 7,
**dadurch gekennzeichnet,**
**dass** die Zuströmöffnung (20) radial zentriert in dem Deckteil (22) ausgebildet ist, und eine axial ausgerichtete Umrandung aufweist, deren Innenwandung gegenüber der axialen Richtung von oben nach unten und nach innen geneigt, z.B. um einen Winkel von 5° bis 15°, vorzugsweise 10°, verläuft.

## Claims

1. Rotor arrangement (1) for rotatable installation in a pump housing of an electric pump for liquid media, in particular a coolant pump, comprising a drive part (3) and a pump part (2) connected to the drive part (3) for conjoint rotation,
the pump part (2) having a flow Pregion (29) which is arranged axially at an upper end of the rotor arrangement (1) and has an inflow opening (20) and a plurality of blades (23) for conducting coolant,
the drive part (3) being formed in a multi-part manner from interconnected parts that are separately injection-molded in an injection molding process, comprising an outer part (30) and an inner part (31), and the outer part (30) having a magnetizable magnetic substance for driving according to the electromotive principle and being magnetized to form at least two magnetic poles, and the outer part (30) enclosing the substantially cylindrical inner part (31) cylindrically at least in regions in an axial drive region (38),
the inner part (31) being substantially cylindrical and being radially widened at its upper end facing in the direction of the flow region (29), axially above the drive region (38), to form a receiving region (32) at least to the radial outer diameter to which the blades (23) extend,
**characterized in that** the pump part (2) has a radially centered, axially extending sleeve (24) which is inserted in a form-fitting manner into a radially centered, axially extending opening (36) of the inner part (31) and extends through the drive region (38).

2. Rotor arrangement (1) according to claim 1,
**characterized in that**
the separately injection-molded parts consist of different material compositions.

3. Rotor arrangement (1) according to either claim 1 or claim 2,
**characterized in that**
the inner part (31) consists of a non-magnetizable material, preferably a plastics material.

4. Rotor arrangement (1) according to any of the preceding claims,
**characterized in that**
depressions (34) are formed on the upper side, facing in the direction of the flow region (29), of the receiving region (32) for receiving the axial blade ends facing in the direction of the upper side, and **in that** the remaining region of the upper side forms an outer guide surface (33) for conducting coolant.

5. Rotor arrangement (1) according to any of the preceding claims,
**characterized in that**
the sleeve (24) has, at its upper end facing in the direction of the flow region (29), a preferably circumferential collar (28) which is designed to complement a preferably circumferential recess (35) in the inner part (31) and is received in the recess (35) in a form-fitting manner.

6. Rotor arrangement (1) according to either claim 4 or claim 5,
**characterized in that**
the sleeve (24) is closed off at its upper end and the closure (24.1) forms an inner guide surface (21) at the top for conducting coolant, which surface merges in particular substantially continuously into the outer guide surface (33).

7. Rotor arrangement (1) according to any of the preceding claims,
**characterized in that**
the pump part (2) has a planar cover part (22) which at least partially limits the flow region (28) at the top and from which the blades (23) extend axially in the direction of the drive part (3).

8. Rotor arrangement (1) according to claim 7,
**characterized in that**
the inflow opening (20) is formed so as to be radially centered in the cover part (22), and has an axially aligned border, the inner wall of which extends so as to be inclined in relation to the axial direction from top to bottom and inward, for example at an angle of from 5° to 15°, preferably 10°.

## Revendications

1. Agencement de rotor (1) destiné à être monté de manière rotative dans un carter de pompe d'une pompe électrique pour milieux liquides, en particulier d'une pompe à liquide de refroidissement, comportant une partie d'entraînement (3) et une partie pompe (2) reliée de manière solidaire en rotation à la partie d'entraînement (3),
dans lequel la partie pompe (2) présente une zone d'écoulement (29) disposée axialement à une extrémité supérieure de l'agencement de rotor (1) et comportant une ouverture d'admission (20) et plusieurs pales (23) permettant de guider du liquide de refroidissement,
dans lequel la partie d'entraînement (3) est formée de plusieurs pièces qui sont injectées séparément dans un procédé de moulage par injection et sont reliées les unes aux autres, la partie d'entraînement comprenant une partie extérieure (30) et une partie intérieure (31), et la partie extérieure (30) permettant un entraînement selon le principe électromoteur présente une substance magnétique magnétisable et est magnétisée par la formation d'au moins deux pôles magnétiques, et dans lequel la partie extérieure (30) entoure de manière cylindrique la partie intérieure (31) essentiellement cylindrique dans une zone d'entraînement axiale (38), au moins dans certaines zones,
dans lequel la partie intérieure (31) est formée essentiellement cylindrique et est élargie radialement à son extrémité supérieure orientée en direction de la zone d'écoulement (29), axialement au-dessus de la zone d'entraînement (38), pour former une zone de réception (32) au moins sur le diamètre extérieur radial sur lequel s'étendent les pales (23),
**caractérisé en ce que** la partie pompe (2) présente, de manière centrée radialement, un manchon (24) s'étendant axialement, lequel est inséré par complémentarité de forme dans une ouverture (36) centrée radialement et s'étendant axialement de la partie intérieure (31), et s'étend à travers la zone d'entraînement (38).

2. Agencement de rotor (1) selon la revendication 1,
**caractérisé en ce**
**que** les pièces injectées séparément les unes des autres sont constituées de différentes compositions de matériaux.

3. Agencement de rotor (1) selon la revendication 1 ou 2,
**caractérisé en ce**
**que** la partie intérieure (31) est constituée d'un matériau non magnétisable, de préférence de matière plastique.

4. Agencement de rotor (1) selon l'une des revendications précédentes,
**caractérisé en ce**
**que** des évidements (34) destinés à recevoir les extrémités de pales axiales orientées en direction du côté supérieur sont formés sur le côté supérieur de la zone de réception (32) orienté en direction de la zone d'écoulement (29), et en ce que la zone restante du côté supérieur forme une surface de guidage externe (33) permettant de guider du liquide de refroidissement.

5. Agencement de rotor (1) selon l'une des revendications précédentes,
**caractérisé en ce**
**que** le manchon (24) présente une collerette (28), de préférence circonférentielle, au niveau de son extrémité supérieure orientée en direction de la zone d'écoulement (29), laquelle collerette est réalisée complémentaire à un évidement (35), de préférence circonférentiel, dans la partie intérieure (31) et est reçue par complémentarité de forme dans l'évidement (35).

6. Agencement de rotor (1) selon la revendication 4 ou 5,
**caractérisé en ce**
**que** le manchon (24) est fermé au niveau de son extrémité supérieure et la fermeture (24.1) forme vers le haut une surface de guidage intérieure (21) permettant de guider du liquide de refroidissement, laquelle surface de guidage intérieure se prolonge en particulier de manière sensiblement continue dans la surface de guidage extérieure (33).

7. Agencement de rotor (1) selon l'une des revendications précédentes,
**caractérisé en ce**
**que** la partie pompe (2) présente une partie de couvercle (22) plate qui limite au moins dans certaines zones la zone d'écoulement (28) vers le haut et à partir de laquelle les pales (23) s'étendent axialement en direction de la partie d'entraînement (3).

8. Agencement de rotor (1) selon la revendication 7,
**caractérisé en ce**
**que** l'ouverture d'admission (20) est formée centrée radialement dans la partie de couvercle (22) et présente une bordure alignée axialement, dont la paroi intérieure est inclinée de haut en bas et vers l'intérieur par rapport à la direction axiale, par exemple à un angle de 5° à 15°, de préférence de 10°.
